# EUROPEAN PATENT SPECIFICATION

(11) **EP 3 005 440 B1**
(45) Date of publication and mention of the grant of the patent: **14.02.2018**
(21) Application number: 13729511.9
(22) Date of filing: 24.05.2013
(51) Int. Cl.: H01M 2/00

(54) **BATTERY WITH INTEGRATED FUSE**
BATTERIE MIT INTEGRIERTER SICHERUNG
BATTERIE AVEC FUSIBLE INTÉGRÉ

(43) Date of publication of application: 13.04.2016
(73) Proprietor: Super B B.V., 7554 TA Hengelo (NL)
(72) Inventor: DOORNEKAMP, Marinus Hendrikus, NL-3823 JB Amersfoort (NL)
(74) Representative: Nederlandsch Octrooibureau
(86) International application number: PCT/NL2013/050380
(87) International publication number: WO 2014/189363

(56) References cited:
- EP-A1- 2 412 581
- WO-A1-2012/158185
- WO-A2-2012/030455
- US-B2- 8 129 046

## Description

### Field of the invention

The present invention relates to a battery with an integrated fuse for over current protection.

### Prior art

US patent publication US2002/0140401 discloses a battery pack provided with batteries, a printed circuit board with battery protection circuit components mounted thereon, and a circuit breaker in a case. The circuit breaker is connected in series with the batteries to allow cut off at a well defined current threshold, independent from temperature of the battery pack. The circuit breaker is disclosed as a bimetal strip or a PTC element, sensitive for the ambient temperature as well as self-heating due to over current from the battery.

International patent publication WO2012/094385A2 discloses a battery with a resettable internal fuse to prevent over current conditions from occurring, keeping the battery from overheating. Once the resettable fuse is reset, the battery is once again usable.

### Summary of the invention

The present invention seeks to provide a safe and reliable battery which is protected against over currents and against overheating, specifically suited for applications in which the battery is arranged to provide high currents. Regular used fuses or circuit breakers as disclosed in the prior art are elements having too high a resistance for these types of applications, as they result in too high a voltage loss when the battery provides the high current during operation.

According to the present invention, a battery according to the preamble is provided, comprising a housing, and one or more battery cells, a primary positive battery terminal and a primary negative battery terminal disposed in the housing, wherein the electrical circuit between the primary positive battery terminal and primary negative terminal comprises a series and/or parallel configuration of the one or more battery cells as well as a series connection of a fuse element, wherein the fuse element is located inside the housing and has a current rating of at least 250A. This provides a battery with integrated components inside the housing, including a fuse for high current applications.

In an embodiment, the one or more battery cells are lithium ion battery cells, e.g. LiFePo, Lithium Iron Phosphate. These types of battery cells allow to build batteries with a high energy density in a housing with limited volume.

In typical embodiments, the fuse element is connected in series in the electrical circuit via a first fuse terminal and a second fuse terminal, allowing to include the fuse element in the electrical circuit with an as low as possible series resistance. This is advantageous and helpful in minimizing the internal resistance of the battery between the primary terminals. Further minimization of electrical resistance may be obtained in a further embodiment wherein the fuse element comprises a Cu or Cu alloy material.

In an embodiment, the primary positive battery terminal and the primary negative battery terminal are made of a Cu or Cu alloy material, with a metal plating, e.g. Sn or Ni, to further reduce the electrical resistance, increase the thermal conductivity, thereby reducing heat generation during operation of the battery.

In advantageous embodiments, the primary positive battery terminal and the primary negative battery terminal comprise one or more attachment members, so that a flat body for providing contact with the primary terminals can be conveniently connected under a preset force to ensure a reduction in contact resistance. The battery of the present invention is provided with an active cooling system for cooling air inside the battery. The battery comprises at least one cooling fan for providing cooling of at least the fuse element. This may be achieved by directly providing cooling air to the fuse element, or indirectly via thermal conduction using heat conducting elements in thermal contact with fuse element terminals, thus allowing the fuse element to dissipate heat through the first and/or second fuse terminal.

Cooling the fuse element may seem counter intuitive as the fuse element should melt when the battery is subjected to an over current due to heating of the fuse element material. However, in view of the present invention, cooling the fuse element minimizes an unwanted voltage drop across the fuse element without impairing the fuse element's ability to protect the battery. So while the battery is under load, cooling the fuse element minimizes the unwanted voltage drop without affecting a required fuse melting temperature should the battery be subjected to an over current.

The cooling fan may also be used for providing cooling air to other hot or warm parts of the battery, such as various connecting metallic parts. For example, in an embodiment, the battery comprises a plurality of cooling ribs in thermal contact with one or more elements of the battery generating heat during operation, wherein the plurality of cooling ribs are in an air receiving arrangement with the at least one cooling fan. In this embodiment the plurality of cooling ribs receive air from the cooling fan for an increased heat transfer to the cooling air and to the cooling ribs.

The air receiving arrangement may also be arranged such that the battery comprises an air deflector disposed between the at least one cooling fan and the plurality of cooling ribs, thereby optimizing the air flow along the plurality of cooling ribs.

There are various heat sources in the battery that generate heat during operational use. In an embodiment, the one or more elements of the battery generating heat during operation comprises one or more electrical components. In a further embodiment, the one or more elements of the battery generating heat during operation comprise the primary positive battery terminal. In yet a further embodiment, the one or more elements of the battery generating heat during operation comprise a secondary positive terminal connector connected to a positive cell terminal of the one or more battery cells and to the series connection of fuse element, first fuse terminal and second fuse terminal.

In further embodiments the fuse element is positioned in a fuse box comprising a closeable lid, which can be hinged and/or screwed on the housing for facilitating easy access to the fuse element for maintenance purposes, such as replacing the fuse element when needed. Visual inspection of the fuse element is also practical, so that in advantageous embodiments the closeable lid is made of transparent material.

In view of the above embodiments, heat generated by the one or more battery cells, as well as various other components of the battery, can be dissipated safely and reliably. The battery of the present invention is furthermore protected against overheating by means of the fuse element, which breaks continuity of the electrical circuit between the primary positive and primary negative battery terminals should the battery be subjected to excess currents or over currents. The battery can be further protected against overheating when subjected to high currents when implementing the embodiments wherein the battery comprises at least one cooling fan and a plurality of cooling ribs receiving cooling air from the cooling fan.

### Short description of drawings

The present invention will be discussed in more detail hereinafter based on a number of exemplary embodiments with reference to the drawings, in which
Fig. 1 shows a perspective view of an embodiment of a battery with integrated fuse according to the present invention,
Fig. 2 shows a top view of an embodiment of a battery according to the present invention.
Fig. 3 shows a perspective view of an embodiment of a battery according to the present invention.

### Detailed description of exemplary embodiments

The present invention relates to a battery with an integrated fuse for over current and overheating protection, such as protection against high or excess currents flowing through the battery and overheating as a result thereof. The invention embodiments especially apply to batteries having a large current delivery capacity, in the range of more than 250A, e.g. more than 400A, or even 500 A, during a longer period.

Safety standards with regard to battery power sources tend to become more stringent throughout various industries (e.g. automotive, aviation), and strict compliance therewith is essential to guarantee that demanding battery applications should not pose any danger to human life. Typically, a battery may overheat when subjected to high or excessive currents, for example, when a current is drawn from or supplied to the battery near or over its rated capacity. An overheated battery may catch fire and set its surroundings on fire with potentially devastating results. Consequently, there is a need for a battery capable of safely withstanding high or excessive currents and over currents without posing a danger to its surroundings and human life.

In addition to safety, there are various cost and environmental considerations that impose further demands on battery applications. For example, it is generally undesirable to replace a battery as it may comprise considerable quantities of expensive and/or toxic rare-earth and/or heavy metals, which typically require specialized and costly disposal procedures. As a result, there is a further need for a battery which is durable, robust, reliable and capable of withstanding excessive current flows and over currents without overheating and/or getting damaged. The battery should be easily recoverable either manually or automatically to resume normal operation once the problem that caused the high or excessive currents has been resolved, thereby avoiding further replacement and disposal costs of the battery. In prior art systems, where batteries are being used capable of delivering high currents (>250A), normally external fuses are being used for over current protection.

According to the invention, it is a goal to provide a safe and reliable battery capable of delivering high currents, which can be used safely in a variety of circumstances. The battery of the present invention can be used for demanding applications in e.g. the aviation industry, military industry, automotive industry, medical industry, consumer electronics industry and alike. The battery according to one or more of the present invention embodiment is capable of sustaining currents near or at its maximum allowable current range without overheating.

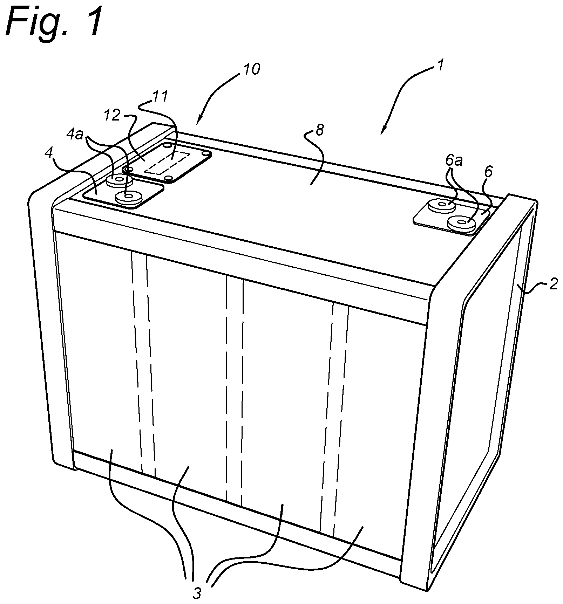

Fig. 1 shows a perspective view of an embodiment of a battery 1 with an integrated fuse according to the present invention. The battery 1 comprises a housing 2 enveloping the battery 1 on all sides, and one or more battery cells 3 inside the housing 2 (indicated by dashed lines in Fig. 1). Furthermore, a primary positive battery terminal 4 and a primary negative battery terminal 6 are disposed in the housing 2 accessible externally to connect leads. The electrical circuit between the primary positive battery terminal 4 and primary negative terminal 6 inside the housing 2 comprises a series and/or parallel configuration of the one or more battery cells 3, as well as a series connection of a fuse element 11. The fuse element 11 is also located inside the housing 2, and the fuse element 11 has a current rating of at least 250A, e.g. at least 400A, or even 500A. In the embodiments shown, the fuse element 11 is connected in series to the primary positive battery terminal 4, but the fuse element 11 could also be provided in series connection with the primary negative battery terminal 6, or even in series connection between two sets of battery cells 3.

In the embodiment shown, the primary positive and negative battery terminals 4, 6, as well as the fuse element 11 are located at a top side 8 of the housing 2.

The primary positive and primary negative battery terminals 4, 6 are used to connect the battery 1 to a load or a battery charger. In advantageous embodiments, the primary positive and primary negative battery terminals 4,6 may be provided with standardised connectors known in the industry or with custom attachment members 4a, 6a for connecting power cables and the like. In a further embodiment, the primary positive battery terminal 4 and the primary negative battery terminal 6 comprise one or more attachment members 4a, 6a (two as shown in the embodiment of Fig. 1). The attachment members 4a, 6a provide enlarged surface contacts for connecting leads of an external load or charger. The enlarged surface contacts further reduce electrical contact resistance and facilitate thermal conductivity, as a result of which heat generation is minimized.

In the embodiment shown, the fuse element 11 is positioned in a fuse box 10 comprising a closeable lid 12. The closeable lid 12 facilitates access to the fuse box 10 for servicing and maintenance purposes, such as replacing the fuse element 11. The closeable lid 12 thus provides a convenient way to access the fuse element 11 without removing other parts of the housing 2. Typically, the closeable lid 12 is flush with the top side 8 of the housing 2 and can be mounted on the fuse box 10 using e.g. screws, bolts, nuts, hinges, and/or snap-fit connections and the like. In an advantageous embodiment, the closable lid 12 is made of transparent material such as glass or transparent plastic, so that visual inspection of the fuse element 11 is possible without opening the fuse box 10.

According to the invention, the main function of the fuse element 11 is to prevent damage to the battery 1 and danger to connected equipment and environment as a result of over currents flowing there through. As elaborated earlier, excessive currents or over currents may cause the battery 1 to overheat and catch fire with potentially devastating results. The fuse element 11 prevents such overheating by breaking electrical continuity of the circuit between the primary battery terminals 4, 6, so that no current can flow through the one or more battery cells 3 once the fuse element 11 melts or breaks. In typical embodiment of the invention, the fuse element 11 has a current rating of at least 250A but a higher current rating is conceivable.

In advantageous embodiments, the one or more battery cells 3 are lithium ion battery cells, comprising e.g. LiFePo, Lithium Iron Phosphate. In all embodiments, every battery cell 3 comprises a positive cell terminal and a negative cell terminal, arranged in a parallel, series or combined parallel/series configuration to provide a desired voltage over the primary positive and primary negative battery terminals 4, 6.

In advantage embodiments, the primary positive battery terminal 4 and the primary negative battery terminal 6 each have a contact surface of e.g. at least 400 mm² for keeping the electrical contact resistance low and for increasing thermal conductivity through the contact surface. Thus reducing heat generation by keeping the electrical contact resistance low and increasing thermal conductivity through large contact surfaces.

In further advantageous embodiments, the primary positive and primary negative battery terminals 4, 6 are spaced apart as far as possible in the housing 2 for minimizing the likelihood of shorting said terminals 4, 6 by accident. In the embodiment shown, the positive and negative battery terminals 4, 6 are diagonally disposed in the housing 2 for maximizing the distance there between.

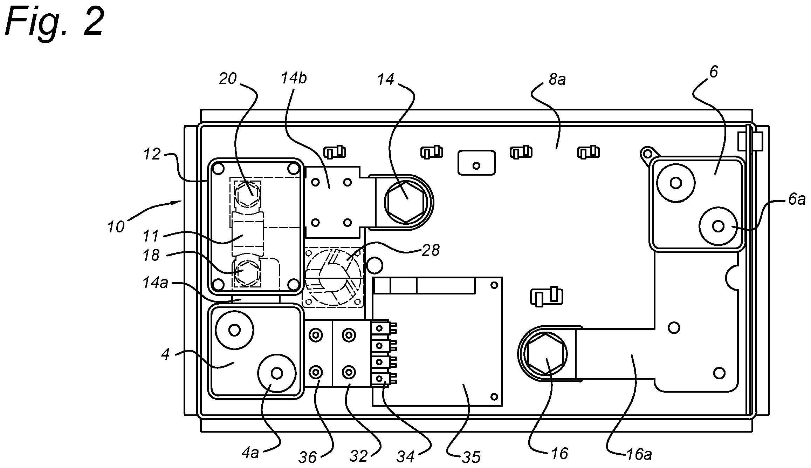

Fig. 2 shows a top view of an embodiment of a battery 1 according to the present invention. In this embodiment, the housing 2 (or a part of the housing 2 forming the top side 8 of the battery 1) has been removed and various internal components of the battery 1 are now visible. In the embodiment shown, the battery 1 comprises a secondary positive battery terminal 14 and a secondary negative battery terminal 16. The secondary positive battery terminal 14 is connected to a positive cell terminal of a battery cell 3 and the secondary negative battery terminal 16 is connected to a negative cell terminal of a battery cell 3. The secondary positive and secondary negative battery terminals 14, 16 can be embodied as bolts or pins having a threaded connection with a corresponding positive and negative cell terminal of the one or more battery cells 3. Such threaded connections circumvent the need for welding and simplify the assembly process of the battery 1.

The fuse element 11 is connected in series in the electrical circuit via a first fuse terminal 18 and a second fuse terminal 20, wherein an electrical resistance between the first fuse terminal 18 and second fuse terminal 20 has a value between 0,080 and 0,250 milliohm (mΩ).

In an embodiment, the fuse element 11 comprises a Cu or Cu alloy material, thereby keeping the (internal) electrical resistance sufficiently low.

According to the invention, the fuse element 11 should have minimal resistance with respect to the total resistance of the electrical circuit or path between the primary positive and primary negative battery terminals 4, 6 of the battery 1. In particular, as high currents may flow through the fuse element 11, a high internal resistance of the fuse element 11 would result in a significant voltage drop between the primary positive battery terminal 4 and the secondary positive battery terminal 14, as well as unwanted heat generation by the fuse element 11. Keeping the electrical resistance of the fuse element 11 as low as possible is therefore desired.

In an embodiment the primary positive battery terminal 4 and the primary negative battery terminal 6 are made of a Cu or Cu alloy material, with a metal plating, e.g. made of Sn or Ni This material decreases electrical contact resistance and facilitates thermal conductivity for reducing heat generation.

In the embodiment shown in Fig. 2, the battery 1 further comprises a negative terminal connector 16a connecting the primary negative battery terminal 6 to a negative cell terminal of battery cell 3, via the secondary negative battery terminal 16. The battery 1 also comprises a primary positive terminal connector 14a connecting the first fuse terminal 18 to the primary positive battery terminal 4. The battery 1 further comprises a secondary positive terminal connector 14b connecting the second fuse terminal 20 to a positive cell terminal of a battery cell 3, i.e. the secondary positive battery terminal 14.

In an embodiment, the secondary positive battery terminal 14 may provide a threaded connection (e.g. bolt) for fastening the secondary positive terminal connector 14b to a positive cell terminal, and the secondary negative battery terminal 16 provides a threaded connection (e.g. bolt) for fastening the negative terminal connector 16a to a negative cell terminal.

The primary and secondary positive terminal connecters 14a, 14b, and the negative terminal connector 16a may be embodied as conducting (e.g. metallic) plate elements having reduced electrical resistance and a high thermal conductivity.

The battery 1 of the present invention comprises one or more elements generating heat, such as the one or more battery cells 3 under load. However, there are various other sources of heat such as one or more electrical components 34 mounted on a printed circuit board 35 (PCB), e.g. (power) transistors, FETs for battery monitoring and control purposes. Hence, the one or more elements of the battery 1 generating heat during operation comprise one or more electrical components 34.

In a further embodiment, the one or more elements of the battery 1 generating heat during operation comprise the primary positive battery terminal 4. Note that the attachment member 4a may be source of heat as there exists electrical contact resistance between contact surfaces of the attachment member 4a and a terminal connector of an external load or charger connected to said attachment member 4a.

In yet a further embodiment, the one or more elements of the battery 1 generating heat during operation comprise the secondary positive terminal connector 14b connected to a positive cell terminal 14 of the one or more battery cells 3 and to the series connection of fuse element 11, first fuse terminal 18 and second fuse terminal 20. Furthermore, the primary positive terminal connector 14a connected to the first fuse terminal 18 and the primary positive battery terminal 4 may also be a source of heat when the battery 1 is under load.

To dissipate heat generated by the one or more elements of the battery 1, the battery 1 comprises at least one cooling fan 28 for providing cooling air to at least the fuse element 11. In advantageous embodiments, the at least one cooling fan 28 also provides cooling for the electrical elements 34, the primary positive battery terminal 4, the primary and secondary positive terminal connectors 14a, 14b, the first and second fuse terminals 18, 20, and/or the secondary positive battery terminal 14 (i.e. positive cell terminal 14) and secondary negative battery terminal 16 (i.e. negative cell terminal 16).

The cooling fan 28 is mounted on top of a base plate 8a, which also provides the structural support or apertures for assembly and connection of the various battery elements, such as the PCB 35, and the primary positive and negative battery terminals 4,6.

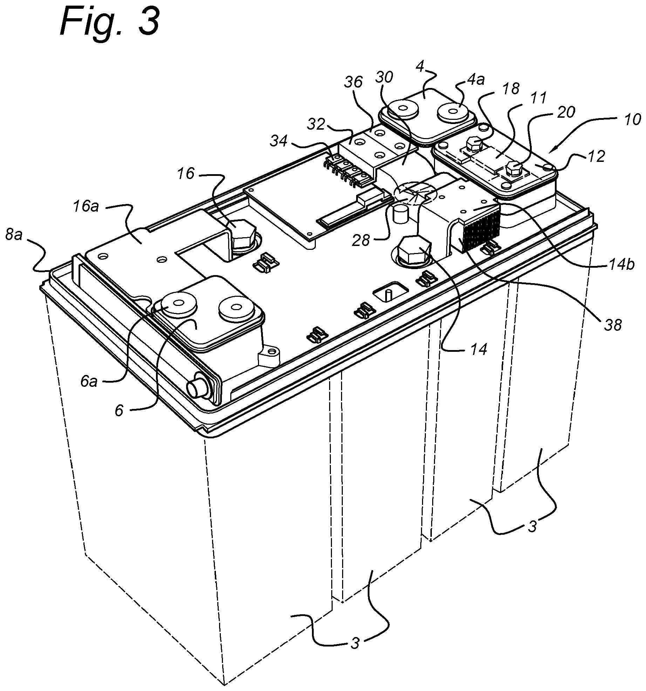

Fig. 3 shows a perspective view of an embodiment of a battery 1 according to the present invention (with the housing 2 removed). In this embodiment it is shown that the battery 1 further comprises a plurality of cooling ribs 38 in thermal contact with one or more elements of the battery 1 generating heat during operation, and wherein the plurality of cooling ribs 38 are in an air receiving arrangement with the at least one cooling fan 28. In this embodiment the plurality of cooling ribs 38 receive air from the at least one cooling fan 28, wherein discharged air from the cooling fan 28 flows along the plurality of cooling ribs 28 for improved cooling

The air receiving arrangement may be embodied by an element 30 directing or guiding air from the at least one cooling fan 28 to the plurality of cooling ribs 38. More specifically, the element 30 may be embodied as an air deflector 30 disposed between the at least one cooling fan 28 and the plurality of cooling ribs 38. The air deflector 30 is used to guide air from the cooling fan 28 to the plurality of cooling ribs 38, thereby optimizing the exchange of heat between the plurality of cooling ribs 38 and the air passing there through. The cooling fan 28 of the present invention therefore provides further protection against overheating by circulating air through the housing 2 along the plurality of cooling ribs 38.

To further improve cooling of the battery 1, in an embodiment the battery 1 may comprise a first cooling member 32 in thermal contact with the one or more electrical components 34 mounted on the PCB 35, wherein the first cooling member 32 is in thermal contact with the plurality of cooling ribs 38 (under the first cooling member 32, not visible in Fig. 3). In this embodiment the first cooling member 32 facilitates thermal conductivity from the one or more electrical components 34 to the plurality of cooling ribs 38. As a result, the cooling air from the at least one cooling fan 38 absorbs more heat from the one or more electrical component 34. The first cooling member 32 may be embodied as a metallic plate (e.g. aluminium) having good thermal conductivity.

Cooling of the battery 1 may be further improved by a second cooling member 36 in thermal contact with the primary positive battery terminal 4 and the plurality of cooling ribs 38. This allows for heat generated at the primary positive battery terminal 4 to be effectively transferred to the plurality of cooling ribs 38. The second cooling member 36 is may be embodied by a metallic plate (e.g. aluminium) having high thermal conductivity.

Based on the embodiment described above, effective cooling of the battery 1 under load is thus accomplished by what is essentially a thermal bridge comprising the first and second cooling members 32, 36, the primary and secondary positive terminal connectors 14a, 14b, the first and second fuse terminals 18, 20, the primary and secondary positive battery terminals 4, 14, the plurality of cooling ribs 38 as well as the fuse element 11 itself. This thermal bridge allows heat to be transferred quickly and efficiently to the plurality of cooling ribs 38. Cooling air discharged from the at least one cooling fan 28 then absorbs the heat to protect the battery 1 against overheating.

In addition to choosing suitable material properties, effective cooling of the battery 1 is further accomplished by choosing suitable geometries and shape of the various components. For example, in the embodiments shown in Fig. 2 and 3, a contact area between the first and second cooling members 32, 36, and the plurality of cooling ribs 38 can be maximized by making said cooling members 32, 36 flat or plate-like, thereby increasing the contact area for optimal thermal conductivity. Likewise, the primary positive battery terminal 4 as depicted in Fig. 2 and 3 may comprise a large surface contact area for the second cooling member 36 and the primary positive terminal connector 14a. In an advantageous embodiment, the second cooling member 36 and the primary positive terminal connector 14a are manufactured as a single plate component having sufficiently low electrical resistance and high thermal conductivity.

Finally, it should be noted that cooling air need not only circulate within the housing 2 by means of the at least one cooling fan 28. It is certainly conceivable that cooling air may enter and be discharge from the housing 2 at convenient locations. That is, in an embodiment the cooling of the battery 1 is accomplished by a substantially closed system circulating cooling air within the housing 2. In another embodiment the cooling of the battery 1 is accomplished by a substantially open system taking in and discharging cooling air from the housing at convenient locations in the housing 2.

The present invention embodiments have been described above with reference to a number of exemplary embodiments as shown in the drawings. Modifications and alternative implementations of some parts or elements are possible, and are included in the scope of protection as defined in the appended claims.

## Claims

1. Battery, comprising a housing (2), and one or more battery cells (3), a primary positive battery terminal (4) and a primary negative battery terminal (6) disposed in the housing (2),
wherein the electrical circuit between the primary positive battery terminal (4) and primary negative terminal (6) comprises a series and/or parallel configuration of the one or more battery cells (3) as well as a series connection of a fuse element (11),
wherein the fuse element (11) is located inside the housing (2) and has a current rating of at least 250A, wherein the battery comprises at least one cooling fan (28) for providing cooling of at least the fuse element (11).

2. Battery according to claim 1, wherein the one or more battery cells (3) are lithium ion battery cells.

3. Battery according to claim 1 or 2, wherein the fuse element (11) is connected in series in the electrical circuit via a first fuse terminal (18) and a second fuse terminal (20).

4. Battery according to claim 1, 2 or 3, wherein the fuse element (11) comprises a Cu or Cu alloy material.

5. Battery according to any one of claims 1-4, wherein the primary positive battery terminal (4) and the primary negative battery terminal (6) are made of a Cu or Cu alloy material with a metal plating.

6. Battery according to any one of claims 1-5, wherein the primary positive battery terminal (4) and the primary negative battery terminal (6) comprise one or more attachment members (4a, 6a).

7. Battery according to any one of claims 1-6, wherein the fuse element (11) is cooled indirectly via fuse element terminals.

8. Battery according to claim 7, further comprising a plurality of cooling ribs (38) in thermal contact with one or more elements of the battery generating heat during operation, and wherein the plurality of cooling ribs (38) are in an air receiving arrangement with the at least one cooling fan (28).

9. Battery according to claim 8, further comprising an air deflector (30) disposed between the at least one cooling fan (28) and the plurality of cooling ribs (38).

10. Battery according to claim 8 or 9, wherein the one or more elements of the battery generating heat during operation comprise one or more electrical components (34).

11. Battery according to any one of claims 8-10, wherein the one or more elements of the battery generating heat during operation comprise the primary positive battery terminal (4).

12. Battery according to any one of claims 8-11, wherein the one or more elements of the battery generating heat during operation comprise a secondary positive terminal connector (14b) connected to a positive cell terminal (14) of the one or more battery cells (3) and to the series connection of fuse element (11), first fuse terminal (18) and second fuse terminal (20).

13. Battery according to any one of claims 1-12, wherein the fuse element (11) is positioned in a fuse box (10) comprising a closeable lid (12).

14. Battery according to claim 13, wherein the closable lid (12) is made of transparent material.

## Patentansprüche

1. Batterie, umfassend ein Gehäuse (2) und eine oder mehrere Batteriezellen (3), einen primären positiven Batterieanschluss (4) und einen primären negativen Batterieanschluss (6), die in dem Gehäuse (2) angeordnet sind,
wobei die elektrische Schaltung zwischen dem primären positiven Batterieanschluss (4) und dem primären negativen Anschluss (6) eine Reihen- und/oder Parallelkonfiguration der einen oder der mehreren Batteriezellen (3) sowie eine Reihenschaltung eines Sicherungselements (11) umfasst, wobei sich das Sicherungselement (11) innerhalb des Gehäuses (2) befindet und eine Strombelastbarkeit von wenigstens 250 A aufweist, wobei die Batterie wenigstens ein Kühlgebläse (28) zur Kühlung wenigstens des Sicherungselements (11) aufweist.

2. Batterie nach Anspruch 1, bei der die eine oder die mehreren Batteriezellen (3) Lithium-Ionen-Batteriezellen sind.

3. Batterie nach Anspruch 1 oder 2, bei der das Sicherungselement (11) in dem elektrischen Stromkreis über einen ersten Sicherungsanschluss (18) und einen zweiten Sicherungsanschluss (20) in Reihe geschaltet ist.

4. Batterie nach Anspruch 1, 2 oder 3, bei der das Sicherungselement (11) ein Cu- oder Cu-Legierungsmaterial umfasst.

5. Batterie nach einem der Ansprüche 1 bis 4, bei der der primäre positive Batterieanschluss (4) und der primäre negative Batterieanschluss (6) aus einem Cu- oder Cu-Legierungsmaterial mit einer Metallplattierung bestehen.

6. Batterie nach einem der Ansprüche 1 bis 5, bei der der primäre positive Batterieanschluss (4) und der primäre negative Batterieanschluss (6) ein oder mehrere Befestigungselemente (4a, 6a) umfassen.

7. Batterie nach einem der Ansprüche 1 bis 6, bei der das Sicherungselement (11) indirekt über Sicherungselementanschlüsse gekühlt wird.

8. Batterie nach Anspruch 7, weiterhin umfassend eine Vielzahl von Kühlrippen (38) in thermischem Kontakt mit einem oder mehreren Elementen der Batterie, die während des Betriebs Wärme erzeugen, wobei die Vielzahl von Kühlrippen (38) in einer Luftaufnahmeanordnung mit dem wenigstens einen Kühlgebläse (28) ist.

9. Batterie nach Anspruch 8, weiterhin umfassend einen Luftablenker (30) der zwischen dem wenigstens einen Kühlgebläse (28) und der Mehrzahl von Kühlrippen (38) angeordnet ist.

10. Batterie nach Anspruch 8 oder 9, bei der das eine oder die mehreren Elemente der Batterie, die während des Betriebs Wärme erzeugen, ein oder mehrere elektrische Bauteile (34) umfassen.

11. Batterie nach einem der Ansprüche 8 bis 10, bei der das eine oder die mehreren Elemente der Batterie, die während des Betriebs Wärme erzeugen, den primären positiven Batterieanschluss (4) umfassen.

12. Batterie nach einem der Ansprüche 8 bis 11, bei der das eine oder die mehreren Elemente der Batterie, die während des Betriebs Wärme erzeugen, einen sekundären positiven Anschlussverbinder (14b) umfassen, der mit einem positiven Zellenanschluss (14) der einen oder der mehreren Batteriezellen (3) und mit der Reihenschaltung aus Sicherungselement (11), erstem Sicherungsanschluss (18) und zweitem Sicherungsanschluss (20) verbunden ist.

13. Batterie nach einem der Ansprüche 1 bis 12, bei der das Sicherungselement (11) in einem Sicherungskasten (10) positioniert ist, der einen verschließbaren Deckel (12) aufweist.

14. Batterie nach Anspruch 13, bei der der verschließbare Deckel (12) aus transparentem Material besteht.

## Revendications

1. Batterie comprenant un boîtier (2) et une ou plusieurs cellules de batterie (3), une borne de batterie positive primaire (4) et une borne de batterie négative primaire (6) disposées dans le boîtier (2),
dans laquelle le circuit électrique entre la borne de batterie positive primaire (4) et la borne négative primaire (6) comprend une configuration en série et/ou en parallèle de la ou des cellules de batterie (3) ainsi qu'une connexion en série d'un élément fusible (11), dans laquelle l'élément fusible (11) est situé à l'intérieur du boîtier (2) et a un courant nominal d'au moins 250A, la batterie comprenant au moins un ventilateur de refroidissement (28) destiné à refroidir au moins l'élément fusible (11).

2. Batterie selon la revendication 1, dans laquelle la ou les cellules de batterie (3) sont des cellules de batterie à ions lithium.

3. Batterie selon la revendication 1 ou 2, dans laquelle l'élément fusible (11) est connecté en série dans le circuit électrique par le biais d'une première borne de fusible (18) et d'une deuxième borne de fusible (20).

4. Batterie selon la revendication 1, 2 ou 3, dans laquelle l'élément fusible (11) comprend un matériau Cu ou alliage Cu.

5. Batterie selon l'une quelconque des revendications 1 à 4, dans laquelle la borne de batterie positive primaire (4) et la borne de batterie négative primaire (6) sont faites d'un matériau Cu ou alliage Cu pourvu d'un revêtement métallique.

6. Batterie selon l'une quelconque des revendications 1 à 5, dans laquelle la borne de batterie positive primaire (4) et la borne de batterie négative primaire (6) comprennent un ou plusieurs éléments de fixation (4a, 6a).

7. Batterie selon l'une quelconque des revendications 1 à 6, dans laquelle l'élément fusible (11) est refroidi indirectement par le biais de bornes d'élément fusible.

8. Batterie selon la revendication 7, comprenant en outre une pluralité de nervures de refroidissement (38) en contact thermique avec un ou plusieurs éléments de la batterie produisant de la chaleur pendant le fonctionnement, et dans laquelle la pluralité de nervures de refroidissement (38) sont disposées selon un agencement de réception d'air avec ledit au moins un ventilateur de refroidissement (28).

9. Batterie selon la revendication 8, comprenant en outre un déflecteur d'air (30) disposé entre ledit au moins un ventilateur de refroidissement (28) et la pluralité de nervures de refroidissement (38).

10. Batterie selon la revendication 8 ou 9, dans laquelle le ou les éléments de la batterie produisant de la chaleur pendant le fonctionnement comprennent un ou plusieurs composants électriques (34).

11. Batterie selon l'une quelconque des revendications 8 à 10, dans laquelle le ou les éléments de la batterie produisant de la chaleur pendant le fonctionnement comprennent la borne de batterie positive primaire (4).

12. Batterie selon l'une quelconque des revendications 8 à 11, dans laquelle le ou les éléments de la batterie produisant de la chaleur pendant le fonctionnement comprennent un connecteur de borne positive secondaire (14b) connecté à une borne de cellule positive (14) de la ou des cellules de batterie (3) et à la connexion en série de l'élément fusible (11), à la première borne de fusible (18) et à la deuxième borne de fusible (20).

13. Batterie selon l'une quelconque des revendications 1 à 12, dans laquelle l'élément fusible (11) est positionné dans une boîte à fusibles (10) comprenant un couvercle apte à être fermé (12).

14. Batterie selon la revendication 13, dans laquelle le couvercle apte à être fermé (12) est réalisé en matériau transparent.
